# EUROPÄISCHE PATENTANMELDUNG

(11) **EP 1 505 406 A1**
(43) Veröffentlichungstag der Anmeldung: **09.02.2005**
(21) Anmeldenummer: 04017981.4
(22) Anmeldetag: 29.07.2004
(51) Int. Cl.: G01S 3/786, G01J 5/10, B60H 1/00

(54) **Solarsensor**

(30) Priorität: 04.08.2003 DE 10336132
(71) Anmelder: Behr GmbH & Co. KG, 70469 Stuttgart (DE)
(72) Erfinder: Baruschke, Wilhelm, Dipl.-Ing., 73117 Wangen (DE); Lochmahr, Karl, Dipl.-Ing. (FH), 71665 Vaihingen (DE)
(74) Vertreter: Grauel, Andreas, Dr.

(57) **Zusammenfassung**

Die Erfindung betrifft einen Solarsensor (1), insbesondere für eine Kraftfahrzeug-Klimaanlage, zur Ermittlung der Intensität der Sonneneinstrahlung, wobei der Solarsensor (1) mindestens einen Sensor (2, 3) umfasst, und der Sensor (2, 3) ein SMD-Sensor ist, der auf einer schwarzen Fläche angeordnet ist. Der Solarsensor (1) hat insbesondere eine pyramidenstumpfförmige oder tetraederstumpfförmige Gestalt.

## Beschreibung

Die Erfindung betrifft einen Solarsensor, insbesondere für zur mobilen Ermittlung der Sonneneinstrahlung, gemäß dem Oberbegriff des Anspruchs 1.

Aus der US 6,185,950 B1 ist ein tetraederförmiger Solarsensor zur Ermittlung der Richtung und Intensität der Sonneneinstrahlung bekannt, der insbesondere in Verbindung mit der Steuerung einer Kraftfahrzeug-Klimaanlage dient. Dieser Solarsensor weist zwei Sensoren auf, die den beiden Fahrzeugseiten zugeordnet sind und die auf unterschiedlichen Seiten des Tetraeders angeordnet sind. Hierbei sind die Sensoren als Temperatursensoren ausgebildet, wobei diese mit der Oberfläche der entsprechenden Tetraederseite temperaturleitend verbunden sind. Dabei adsorbiert die entsprechende Tetraederseite den Großteil der Sonneneinstrahlung, die auf diese Tetraederseite auftrifft. Die Tetraederseiten sind dabei bevorzugt geschwärzt. Die dritte Seite ist reflektierend ausgebildet, so dass die tatsächliche Temperatur gemessen werden kann.

Es ist Aufgabe der Erfindung, einen verbesserten Solarsensor zur Verfügung zu stellen.

Diese Aufgabe wird gelöst durch einen Solarsensor mit den Merkmalen des Anspruchs 1. Vorteilhafte Ausgestaltungen sind Gegenstand der Unteransprüche.

Erfindungsgemäß ist ein Solarsensor, insbesondere für eine Kraftfahrzeug-Klimaanlage, zur Ermittlung der Intensität der Sonneneinstrahlung, vorgesehen, wobei der Solarsensor zumindest einen Sensor umfasst und der Sensor ein SMD-Sensor, insbesondere mit NTC-Charakteristik, ist, der auf einer relativ großen schwarzen Fläche angeordnet ist. Ein derartiger Solarsensor ist sehr preisgünstig herstellbar, unempfindlich gegenüber äußeren Einflüssen, wie Temperatur, Verschmutzung und Alterung, und es ist keine Schutzbeschichtung erforderlich, welche sich nachteilig auf die Ermittlung der Sonneneinstrahlung auswirken kann. Bevorzugt ist der Sensor ein mittelwertbildender Sensor.

Bevorzugt ist auch der Sensor schwarz eingefärbt, wobei sich die Wirksamkeit erhöht.

Gemäß einer bevorzugten Ausgestaltung wird der Solarsensor durch eine Pyramide, einen Tetraeder oder insbesondere einen Pyramiden- oder Tetraederstumpf gebildet, wobei mehrere Sensoren an Flächen einer Pyramide, eines Pyramidenstumpfes, eines Tetraeders oder eines Tetraederstumpfes insbesondere mittig angeordnet sind. Das Trägermaterial wird vorzugsweise durch Leiterplatten mit großflächigen Leiterbahnen gebildet.

Bevorzugt ist hierbei an der Oberseite und an mindestens zwei Seitenflächen eines Pyramidenstumpfes oder eines Tetraederstumpfes je ein Sensor angeordnet. Im Falle von zwei Sensoren ist der Solarsensor bevorzugt derart angeordnet, dass eine Kante des Solarsensors in der vertikalen Ebene der Längsrichtung des Kraftfahrzeugs verläuft. Auf diese Weise lässt sich für jede Seite des Kraftfahrzeugs die Sonneneinstrahlung mit einem einzigen Solarsensor ermitteln.

Das Trägermaterial ist bevorzugt eine Leiterplatte, wobei auf diese bevorzugt eine Leiterbahn aufgebracht ist, wodurch eine einfache elektrische Anbindung möglich ist. Alternativ zu einer Leiterplatte als Trägermaterial können auch Folienleiter verwendet werden, insbesondere ein FFC (flexible flat cable) oder ein FPC (flexible printed circuit). Eine derartige Anordnung hat eine geringe Masse und passt seine Temperatur schnell an Veränderungen der Sonneneinstrahlung an, so dass eine hohe Dynamik sichergestellt ist.

Im Folgenden wird die Erfindung anhand zweier Ausführungsbeispiele teilweise unter Bezugnahme auf die Zeichnung im Einzelnen erläutert. In der Zeichnung zeigen:
- Fig. 1: eine perspektivische Ansicht eines erfindungsgemäßen Solarsensors, und
- Fig. 2: ein Versuchsdiagramm.

Ein erfindungsgemäßer Solarsensor 1 hat die Form eines Tetraederstumpfes, wobei die obere Ecke des Tetraeders abgeschnitten ist und die entsprechende Fläche parallel zur Fläche auf der Unterseite verläuft. Die sichtbaren Seiten, das heißt die Seitenflächen 2 und die Oberseite 3, sind schwarz eingefärbt, so dass sie sich in Folge der Sonneneinstrahlung erwärmen.

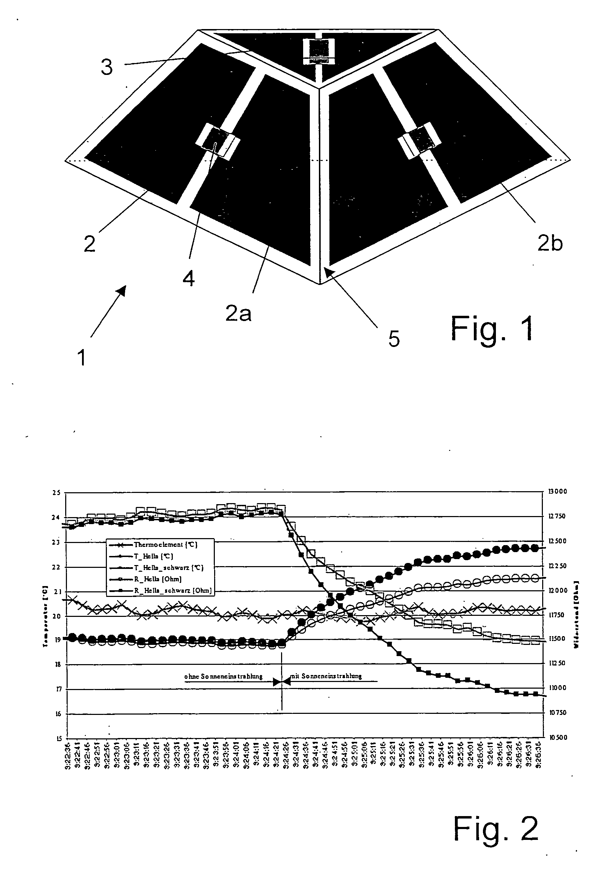

An den Seiten 2, 3 ist jeweils ein SMD-Sensor 4 mit NTC-Charakteristik mittig angeordnet, wobei auch dieser schwarz eingefärbt ist, was jedoch zur besseren Verdeutlichung nicht in Fig. 1 dargestellt ist. Das Trägermaterial der Seiten durch 2, 3 besteht aus Leiterplatten (PCB) mit großflächig aufgebrachten Leiterbahnen.

Der Solarsensor 1 ist vorliegend im Cockpit eines Kraftfahrzeugs angeordnet, kann jedoch beispielsweise auch auf der Motorhaube vor der Windschutzscheibe, auf der Hutablage oder auf dem Dach angeordnet sein. Hierbei verläuft eine Kante 5 in der Ebene, die vertikal in Längsrichtung des Kraftfahrzeuges verläuft, so dass die beiden benachbarten Seitenflächen 2a, 2b der linken bzw. der rechten Seite des Kraftfahrzeugs zugeordnet sind. Auf der in Fig. 1 nicht sichtbaren Rückseite kann gemäß dem vorliegenden Ausführungsbeispiel mindestens ein weiterer Sensor 4 vorgesehen sein, welcher zur Bestimmung der Gesamtintensität betragen und zur Ermittlung der Sonneneinstrahlung im Fondbereich verwendet werden kann.

Die Gesamtintensität wird vorliegend durch den auf der Oberseite 3 angeordneten Sensor 4 in Verbindung mit den anderen, seitlich angeordneten Sensoren 4 ermittelt.

Die ermittelten Daten werden einer Klimaanlagensteuerung zugeführt und entsprechend ausgewertet, wodurch mit diesem einfachen Solarsensor 1 eine optimale Temperierung des Fahrzeuginnenraums möglich ist.

Um eine möglichst dynamische Ermittlung der aktuellen Sonneneinstrahlung zu erreichen, wird ein Solarsensor 1 mit einer möglichst geringen Mässe, zumindest im Bereich der Sensoren 4, verwendet.

Gemäß einer nicht dargestellten Variante für eine vierzonige Klimaanlage sind die SMD-Sensoren auf den Seiten eines Pyramidenstumpfes sowie dessen Oberseite angeordnet. Hierbei dienen die Sensoren an den Seitenflächen der Bestimmung der Sonneneinstrahlung der entsprechenden Zone. Der Sensor auf der Oberseite, gegebenenfalls in Verbindung mit den seitlichen Sensoren, dient zur Bestimmung der gesamten Sonneneinstrahlung.

Gemäß einem weiteren, nicht in der Zeichnung dargestellten Ausführungsbeispiel ist lediglich eine schwarze Fläche mit einem einzelnen SMD-Sensor vorgesehen, welcher die Gesamtintensität der Sonneneinstrahlung ermittelt. Ein derartiger Solarsensor wird insbesondere für einzonige Klimaanlagen verwendet.

In Fig. 2 ist ein rein qualitativer Grundlagenversuch mit unterschiedlichen Temperatursensoren, nämlich einem Temperatursensor (Thermoelement mit punktueller Temperaturmessung) und zwei mittelwertbildende Automotive-Temperatursensoren (Hella und Hella_schwarz mit NTC-Charakteristik), dargestellt. Dabei war einer der mittelwertbildenden Temperatursensoren schwarz eingefärbt (Hella_schwarz).

Wie aus dem Diagramm, in dem die Temperatur [°C] für alle drei Sensoren und der Widerstand [Ohm] für die beiden Automotive-Temperatursensoren über der Zeit dargestellt ist, ersichtlich ist, ergibt sich das beste Meßergebnis, das heißt die schnellste Einpegelung hinsichtlich einer neuen Sonneneinstrahlungssituation mit einem schwarz eingefärbten Automotive-Temperatursensor. Wie aus dem Diagramm ersichtlich ist, ist das Meßsignal, welches als Maß für die Sonneneinstrahlung verwendet werden soll, in absoluter und dynamischer Hinsicht beim schwarz eingefärbten Automotive-Temperatursensor am stärksten ausgeprägt, wohingegen der punktuell messende Temperatursensor keine Änderung bei Sonneneinstrahlung anzeigt.

## Patentansprüche

1. Solarsensor, insbesondere für eine Kraftfahrzeug-Klimaanlage, zur Ermittlung der Intensität der Sonneneinstrahlung, wobei der Solarsensor (1) mindestens einen Sensor (2, 3) umfasst, **dadurch gekennzeichnet, dass** der Sensor (2, 3) ein SMD-Sensor ist, der auf einer schwarzen Fläche angeordnet ist.

2. Solarsensor nach Anspruch 1, **dadurch gekennzeichnet, dass** der Sensor (2, 3) ein mittelwertbildender Sensor ist.

3. Solarsensor nach Anspruch 1 oder 2, **dadurch gekennzeichnet, dass** der Sensor (2, 3) schwarz eingefärbt ist.

4. Solarsensor nach einem der vorhergehenden Ansprüche, **dadurch gekennzeichnet, dass** der Sensor (2, 3) an Flächen einer Pyramide, eines Pyramidenstumpfes, eines Tetraeders oder eines Tetraederstumpfes angeordnet ist.

5. Solarsensor nach Anspruch 4, **dadurch gekennzeichnet, dass** an der Oberseite (3) und an mindestens zwei Seitenflächen (2) eines Pyramidenstumpfes oder eines Tetraederstumpfes je ein Sensor angeordnet ist.

6. Solarsensor nach Anspruch 4 oder 5, **dadurch gekennzeichnet, dass** eine Kante (5) des Solarsensors (1) in der vertikalen Ebene der Längsrichtung des Kraftfahrzeugs verläuft.

7. Solarsensor nach einem der vorhergehenden Ansprüche, **dadurch gekennzeichnet, dass** als Trägermaterial mindestens eine Leiterplatte vorgesehen ist.

8. Solarsensor nach Anspruch 7, **dadurch gekennzeichnet, dass** auf dem Trägermaterial großflächig eine Leiterbahn angebracht ist.

9. Klimaanlage, **gekennzeichnet durch** einen Solarsensor (1) nach einem der Ansprüche 1 bis 8.
